(19) **Europäisches Patentamt / European Patent Office / Office européen des brevets**

(11) **EP 4 764 923 A1**

(12) # EUROPEAN PATENT APPLICATION

(43) Date of publication:
24.06.2026 Bulletin 2026/26

(21) Application number: 25222868.9

(22) Date of filing: 12.12.2025

(51) International Patent Classification (IPC):
**G06F 21/57** (2013.01)     **G06F 21/64** (2013.01)
**H04L 9/32** (2006.01)     **H04L 9/00** (2022.01)

(52) Cooperative Patent Classification (CPC):
**G06F 21/577; G06F 21/64; H04L 9/3239;
H04L 9/50**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 19.12.2024 KR 20240191488

(71) Applicant: **Samsung Electronics Co., Ltd.**
**Suwon-si, Gyeonggi-do 16677 (KR)**

(72) Inventors:
• **CHU, Younsung**
**16677 Suwon-si (KR)**

• **CHOI, Gwangbae**
**16677 Suwon-si (KR)**
• **CHO, Won Hee**
**16677 Suwon-si (KR)**
• **BAE, Mungyu**
**16677 Suwon-si (KR)**
• **LEE, Yongjae**
**16677 Suwon-si (KR)**
• **KIM, Jisoo**
**16677 Suwon-si (KR)**

(74) Representative: **Marks & Clerk LLP**
**15 Fetter Lane**
**London EC4A 1BW (GB)**

(54) **ELECTRONIC DEVICE, METHOD OF GENERATING VERIFICATION REFERENCE VALUE FOR VERIFYING TARGET DEVICE, AND VERIFICATION SYSTEM**

(57)     An example electronic device includes a communication interface, one or more processors, and one or more memories configured to store one or more instructions. The one or more processors are configured to execute the one or more instructions to divide a plurality of pieces of device information on a target device into a plurality of chunks, obtain, based on the plurality of pieces of device information, a plurality of identification values corresponding to the plurality of chunks, divide each of the plurality of identification values into a set number, generate a verification reference value for verifying the target device by combining the plurality of identification values divided into the set number, and transmit the verification reference value to a verification device.

FIG. 1

**Description**

BACKGROUND

Attestation (or tampering detection) is a task of verifying whether tampering occurs in a device and a task of detecting whether tampering occurs in software codes for running a device. In an existing attestation task, hash processing is performed for the entire information on a verification target device of a normal state to generate a hash value, and the generated hash value is provided to a host device. Subsequently, the host device receives and compares a hash value of the entire information actually measured on the verification target device to the single hash value of the entire information on the verification target device of the normal state to determine whether an issue such as tampering occurs.

However, if the hash values are not matched, the above verification manner may find out that the verification target device has an issue but may not find out which information has the issue in the verification target device.

Meanwhile, pieces of information on a verification target device may be sorted into a plurality of areas and a hash value may be generated for each area to be used for attestation. However, in the above verification manner, the amount of data used for verification may increase and the number of verifications may increase. Further, the exposure of information on a structure of the device may increase.

SUMMARY

The present disclosure relates to generating a plurality of hash values by performing hash processing for pieces of device information corresponding to each area of a verification target device, generating a reference value by combining the generated hash values according to a predetermined rule, and performing tampering detection using the generated reference value.

Example implementations are not limited to the technical goals described above, and other technical goals may be clearly understood by those of ordinary skill in the art from the example implementations below.

In general, according to some aspects, an electronic device includes a communication interface, one or more processors, and one or more memories configured to store one or more instructions executed by the one or more processors, and the one or more processors may be configured to execute the one or more instructions to divide a plurality of pieces of device information on a target device into a plurality of chunks, obtain, based on the plurality of pieces of device information, a plurality of identification values corresponding to the plurality of chunks, divide each of the plurality of identification values into a set number, generate a verification reference value for verifying the target device by combining the plurality of identification values divided into the set number, and transmit the verification reference value to a verification device.

In general, according to some aspects, a method, performed by an electronic device, of generating a verification reference value for verifying a target device includes dividing a plurality of pieces of device information on the target device into a plurality of chunks, obtaining, based on the plurality of pieces of device information, a plurality of identification values corresponding to the plurality of chunks, dividing each of the plurality of identification values into a set number, generating a verification reference value for verifying the target device by combining the plurality of identification values divided into the set number, and transmitting the verification reference value to a verification device.

In general, according to some aspects, a verification system includes an electronic device, a target device, and a verification device, and the electronic device may be configured to, in a normal operating state of the target device, divide a plurality of pieces of device information on the target device into a plurality of chunks, obtain, based on the plurality of pieces of device information, a plurality of identification values corresponding to the plurality of chunks, divide each of the plurality of identification values into a set number, generate a verification reference value for verifying the target device by combining the plurality of identification values divided into the set number, and transmit the verification reference value to the verification device, and the target device may be configured to, in a current operating state, obtain a plurality of identification values based on a plurality of pieces of device information on the target device, based on the plurality of identification values, generate a verification measurement value for verifying the target device, and transmit the verification measurement value to the verification device, and the verification device may be configured to, based on the verification reference value and the verification measurement value, verify the target device.

Details of example implementations are included in the detailed description and drawings.

In some implementations, it is possible to generate a plurality of hash values by performing hash processing for pieces of device information corresponding to each area of a verification target device, generate a reference value by combining the generated hash values according to a predetermined rule, and perform tampering detection using the generated reference value.

In some implementations, it is possible to decrease target device information exposed through an attestation task.

In some implementations, it is possible to reduce the amount of data used for an attestation task and the number of verifications.

In some implementations, if tampering occurs in a target device, it is possible to easily debug the target device to find an area where the tampering occurs among a plurality of areas thereof.

Effects of example implementations are not limited to those described above, and other effects not mentioned herein may be clearly understood by those skilled in the art from the appended claims.

At least some of the above and other features of the invention are set out in the claims.

BRIEF DESCRIPTION OF THE DRAWINGS

These and/or other aspects, features, and advantages of the present disclosure will become apparent and more readily appreciated from the following description of example implementations, taken in conjunction with the accompanying drawings.

FIG. 1 is a block diagram of an example of a verification system.
FIG. 2 is a flowchart of example operations of an electronic device.
FIG. 3 is a diagram for illustrating an example of a process of dividing a plurality of pieces of device information into a plurality of chunks.
FIG. 4 is a flowchart of example operations of an electronic device.
FIG. 5 is a diagram for illustrating an example of a process of dividing each of a plurality of hash values into a set number.
FIG. 6 is a diagram for illustrating an example of a process of generating a verification reference value by combining a plurality of hash values.
FIG. 7 is a diagram for illustrating an example of a process of generating a verification reference value by combining a plurality of hash values.
FIG. 8 is a flowchart of example operations of an electronic device.
FIG. 9 is a diagram for illustrating an example of a method of identifying a changed hash value in a verification measurement value.
FIG. 10 is a flowchart of example operations of an electronic device.
FIG. 11 is a flowchart of example operations of an electronic device.

DETAILED DESCRIPTION

Terms used in example implementations are selected from currently widely used general terms if possible while considering the functions in the present disclosure. However, the terms may vary depending on the intention of a person skilled in the art, precedents, the emergence of new technology, and the like. Further, in particular cases, there are also terms arbitrarily selected by the applicant, and in these cases, the meaning will be described in detail in the corresponding descriptions. Therefore, the terms used in the present disclosure are not to be construed simply as its designation but based on the meaning of the term and the overall context of the present disclosure.

Throughout the specification, when a part is described as "comprising or including" a component, it does not exclude another component but may further include another component unless otherwise stated. Further, terms such as "... unit," "... part," and "... module" described in the specification mean a unit that processes at least one function or operation, which may be implemented as hardware, software, or a combination thereof.

Hereinafter, example implementations of the present disclosure will be described in detail with reference to the accompanying drawings so that those of ordinary skill in the art to which the present disclosure pertains may easily implement the example implementations. However, the present disclosure may be implemented in many different forms and is not limited to the example implementations described herein.

Hereinafter, example implementations of the present disclosure will be described in detail with reference to the accompanying drawings.

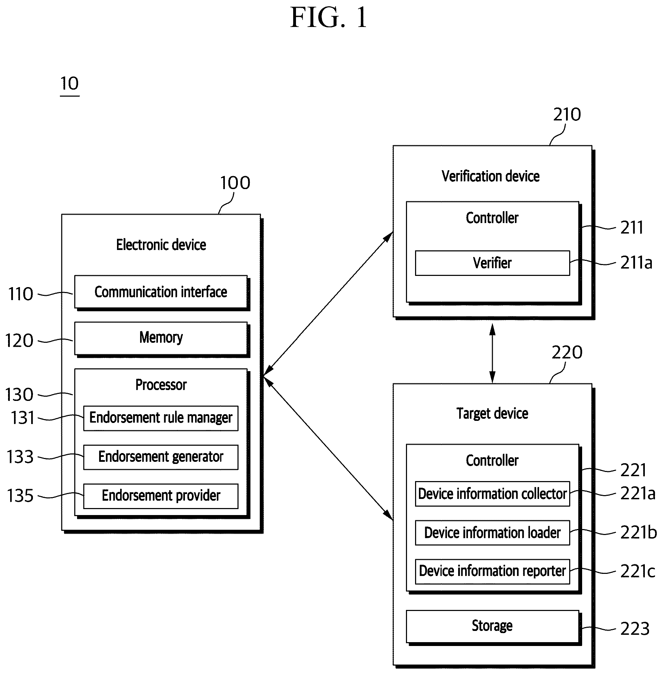

FIG. 1 is a block diagram of an example of a verification system 10.

Referring to FIG. 1, the verification system 10 may include an electronic device 100, a verification device 210, and a target device 220. For convenience of description, in the drawings, each of the electronic device 100, the verification device 210, and the target device 220 is illustrated as one, but is not limited thereto, and each device may be formed as two or more devices.

The electronic device 100 may be a device that generates and manages a rule of generating a verification measurement for performing an attestation task. The electronic device 100 may generate and provide a verification reference value, which is a reference for the attestation task, to the verification device 210 and may provide a rule of generating a verification measurement value, which is a target of the attestation task, to the target device 220. The electronic device 100 may be a device that performs the role of an endorser in the attestation task.

The verification device 210 may be a device that verifies whether an issue such as tampering occurs in the target device 220 based on the verification reference value provided from the electronic device 100 and the verification measurement value provided from the target device 220. The verification device 210 may be a device that performs the role of a host in charge of verification in the attestation task.

The target device 220 may be a device that is a target of the attestation task and, based on the rule of generating the verification measurement value, which is provided from the electronic device 100, may generate and provide the verification measurement value to the verification device 210.

The electronic device 100 may include a communication interface 110, one or more memories 120, and one or more processors 130. At least one of the elements included in the electronic device 100 may be omitted, or another element may be added to the electronic device 100. Additionally or alternatively, some elements may be integrated or implemented as a single entity or a plurality of entities. At least some elements within the electronic device 100 may be connected to each other through a bus, a general purpose input/output (GPIO), a serial peripheral interface (SPI), a mobile industry processor interface (MIPI), or the like to exchange data and/or signals. In the present disclosure, unless otherwise specified, the memory 120 may represent one or more memories 120, and the processor 130 may represent one or more processors 130.

The communication interface 110 of the electronic device 100 may establish a communication channel (e.g., wired or wireless communication channel) with an external device (for example, the verification device 210 and the target device 220) and may transmit and receive a variety of data to and from the external device. The communication interface 110 of the electronic device 100 may include at least one port to be connected to the external device via a wired cable for wired communications with the external device. The communication interface 110 of the electronic device 100 may include and configure a cellular communication module to be connected to a cellular network (for example, third generation (3G), long-term evolution (LTE), fifth generation (5G), wireless broadband (Wibro), or worldwide interoperability for microwave access (Wimax)). The communication interface 110 of the electronic device 100 may include a short-range communication module to transmit and receive data to and from the external device using short-range communications (for example, Wi-Fi, Bluetooth, Bluetooth low energy (BLE), and ultra wideband (UWB)), but is not limited thereto.

The processor 130 of the electronic device 100, which is a configuration that may perform operations or data processing related to the control and/or communication of each element of the electronic device 100, may be operatively connected to the elements of the electronic device 100. The processor 130 may load instructions or data received from another element of the electronic device 100 in the memory 120, process instructions or data stored in the memory 120, and store result data. The memory 120 of the electronic device 100 may store a variety of data used by at least one element (for example, the processor 130). The memory 120 may store instructions for the above-described operations of the processor 130. A program may be stored as software in the memory 120 and may include, for example, an operating system, middleware, or an application.

The processor 130 of the electronic device 100 may include an endorsement rule manager 131, an endorsement generator 133, and an endorsement provider 135. The endorsement rule manager 131, the endorsement generator 133, and the endorsement provider 135 may be a hardware module or a software module. The endorsement rule manager 131 may be a module that generates and manages a rule of generating a verification measurement (for example, a verification reference value or a verification measurement value) for verifying the target device 220. The verification reference value may be a value used to verify the target device 220, which is a target of verification, and may be a value generated based on a plurality of pieces of device information obtained in a normal operating state of the target device 220. A normal operating state may be a state that has been verified as being normal or safe (e.g., non-tampered). The device information obtained in the normal operating state may be predefined (e.g., predefined by the manufacturer based on measurements in a controlled environment). Alternatively or in addition the device information obtained in the normal operating state may be obtained while the device is independently verified as operating in the normal operating state. The verification reference value may also be referred to as a golden measurement. The verification measurement value may be a value generated based on a plurality of pieces of device information obtained in a current operating state of the target device 220. The verification measurement value may also be referred to as measurement information. The endorsement provider 135 may be a module that provides the generated verification reference value to the verification device 210. The endorsement generator 133 may be a module that generates a rule for generating a verification measurement and provides the generated rule to the target device 220.

The verification device 210 may include a controller 211. At least one of the elements included in the verification device 210 may be omitted or another element (for example, a communication interface) may be added to the verification device 210. Additionally or alternatively, some elements may be integrated or implemented as a single entity or a plurality of entities. At least some elements within the verification device 210 may be connected to each other through a bus, a GPIO, an SPI, an MIPI, or the like to exchange data and/or signals. The controller 211 of the verification device 210 may include a verifier 211a. The verifier 211a may verify whether tampering occurs (e.g., has occurred) in the target device 220 by comparing the verification reference value received from the electronic device 100 and the verification measurement value received from the target device 220.

The target device 220 may include a controller 221 and a storage 223. At least one of the elements included in the target device 220 may be omitted or another element (for example, a communication interface) may be added to the target device 220. Additionally or alternatively, some elements may be integrated or implemented as a single entity or a plurality of entities. At least some elements within the target device 220 may be connected to each other through a bus, a GPIO, an SPI, an MIPI, or the like to exchange data and/or signals. The controller 221 of the target device 220 may include a device information collector 221a, a device information loader 221b, and a device information reporter 221c. The device information collector 221a may be a module that collects a variety of device information on the target device 220. The device information on the target device 220 may include software information and hardware information of the target device 220. The software information of the target device 220 may include, for example, software/firmware information or code data corresponding to various functions implemented in software/firmware. The hardware information of the target device 220 may include, for example, information on a hardware core, core registry information, or information on various noises (e.g., different noise or noise signals) generated during the operation of hardware. For example, in the device information on the target device 220, configuration data of the target device 220, code data regarding codes implemented in the target device 220, read-only (RO) data, register-transfer level (RTL) data regarding RTLs, core information, and/or metadata may be collected. In other words, the device information collector 221a may collect a variety of information that may be changed if the target device 220 is hacked as the device information.

The above-described data are examples, and the device information collector 221a may collect a variety of device information with which tampering may occur in addition to the above-described data. The device information loader 221b may store a plurality of pieces of device information collected by the device information collector 221a in the storage 223 and load device information stored in the storage 223. The device information reporter 221c may receive a rule for generating a verification measurement from the electronic device 100 and generate a verification measurement value based on the plurality of pieces of device information and the rule. The device information reporter 221c may report the generated verification measurement value to the verification device 210.

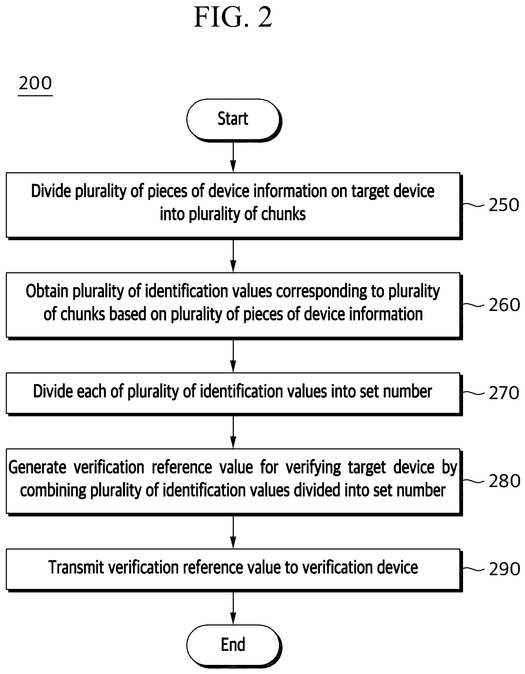

FIG. 2 is a flowchart of example operations of the electronic device 100.

Referring to a flowchart 200, the processor 130 of the electronic device 100, in operation 250, may divide a plurality of pieces of device information on the target device 220 into a plurality of chunks. The processor 130 may collect the plurality of pieces of device information on the target device 220. The plurality of pieces of device information may include a variety of device information with which tampering may occur. The device information on the target device 220 may include software information and hardware information of the target device 220. The software information of the target device 220 may include, for example, software/firmware information or code data corresponding to various functions implemented in software/firmware. The hardware information of the target device 220 may include, for example, information on a hardware core, core registry information, or information on various noises (e.g., different noise, or noise signals) generated during the operation of hardware. The device information on the target device 220 may include, for example, configuration data of the target device 220, code data regarding codes implemented in the target device 220, read-only (RO) data, register-transfer level (RTL) data regarding RTLs, core information, or metadata.

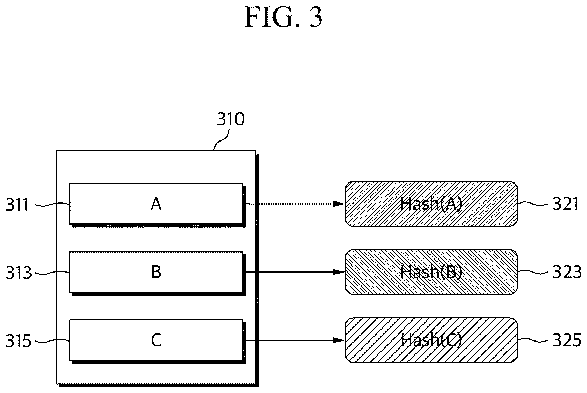

The processor 130 may divide the plurality of pieces of device information into the plurality of chunks. A chunk may refer to a data chunk into which pieces of device information are lumped (e.g., segmented). A criterion for dividing the plurality of pieces of device information into the plurality of chunks may be set manually by a user and/or may be set based on a type of device information. For example, the processor 130 may divide the plurality of pieces of device information so that information (e.g., data) for each of a plurality of functions implemented in software/firmware forms a single chunk. Each chunk may correspond to a particular function or group of functions. For example, the processor 130 may divide the plurality of pieces of device information so that information (e.g., data) for each of a plurality of cores of hardware forms a single chunk. Each chunk may correspond to a particular core of hardware, or a particular group of cores of hardware. Based on various criteria in addition thereto, the processor 130 may divide the plurality of pieces of device information into the plurality of chunks. A method of dividing the plurality of pieces of device information into the plurality of chunks is described using FIG. 3. Referring to FIG. 3, a plurality of pieces of device information 310 may be divided into a plurality of chunks 311, 313, and 315 by the processor 130. In addition thereto, the processor 130 may divide the plurality of pieces of device information into the plurality of chunks 311, 313, and 315 according to various areas. FIG. 3 illustrates as an example that the plurality of pieces of device information are divided into three chunks, which are three areas, but the number of the plurality of chunks 311, 313, and 315 may be changed.

The processor 130, in operation 260, may obtain a plurality of identification values corresponding to the plurality of chunks based on the plurality of pieces of device information. The processor 130 may generate an identification value by applying a hash function to the plurality of pieces of device information and may also generate an identification value using symmetric key encryption or asymmetric key encryption. In the present disclosure, an identification value is described as a hash value for convenience of description, but the above-described identification values may be used in addition to the hash value. Referring to FIG. 3, the processor 130 may generate a plurality of hash values 321, 323, and 325 corresponding to the plurality of chunks 311, 313, and 315 based on the plurality of pieces of device information. The processor 130 may generate the plurality of hash values 321, 323, and 325 by performing hash processing for each of the plurality of chunks 311, 313, and 315. The hash processing may represent a process of generating a hash value by applying a hash function to information included in each of the plurality of chunks. The hash function is a function for mapping data with an arbitrary length to data with a fixed length, and a value obtained by the hash function may be referred to as the hash value. In other words, the hash value may represent a string or a numeric string with a fixed length. The number of the plurality of hash values 321, 323, and 325 may have a one-to-one correspondence with the number of the plurality of chunks 311, 313, and 315.

The processor 130, in operation 270, may divide each of the plurality of identification values into a set number (e.g., into a set number of sub-values (e.g., hash sub-values)). The processor 130 may divide the plurality of identification values into the set number to have uniform lengths or similar lengths (e.g., each sub-value may have a similar or same length). For instance, the identification values may be partitioned into groups having equal or nearly equal sizes, with sizes differing by at most one to maintain integer values. The processor 130 may divide each of the plurality of identification values corresponding to the plurality of chunks into the set number. Here, the set number may be determined based on the number of subsets of a set having each of the plurality of identification values as elements. The number of subsets may exclude a universal set and an empty set. Specifically, the set number may be half of the number of the subsets described above. For example, the set number described above may be determined using the following equation 1.

[Equation 1]

$$k = 2^{n-1} - 1$$

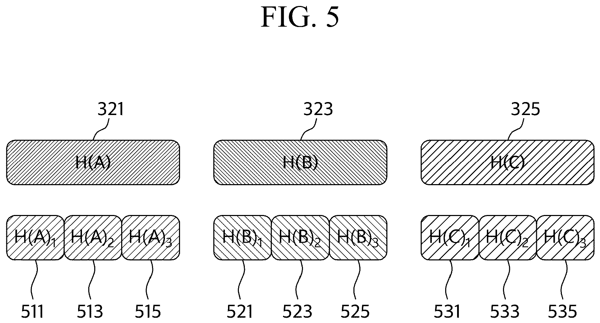

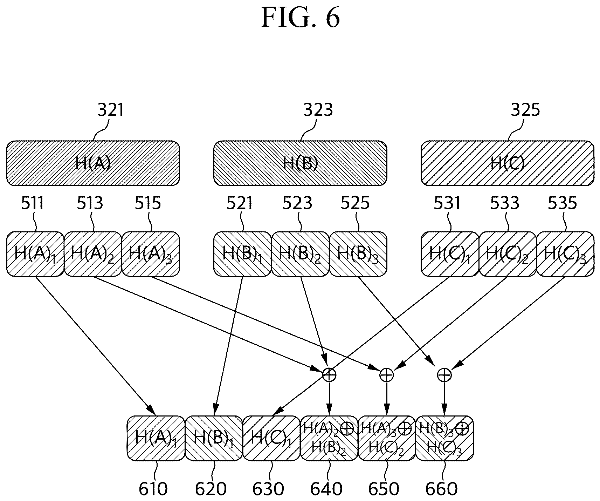

In equation 1, k may indicate the set number, and n may indicate the number of a plurality of hash values. For example, as in FIGS. 5 and 6, if the number (n) of the plurality of hash values is 3, the processor 130 may divide each of the plurality of hash values into 3 ($2^{(3-1)}$ - 1). Referring to FIG. 5, the processor 130 may divide A hash value H(A) 321 into three to obtain hash values $H(A)_1$ 511, $H(A)_2$ 513, and $H(A)_3$ 515. For example, if the length of the A hash value H(A) 321 is 256 bits, the length of the hash value $H(A)_1$ 511 may be 86 bits, the length of $H(A)_2$ 513 may be 85 bits, and the length of $H(A)_3$ 515 may be 85 bits. In a similar manner, the processor 130 may divide B hash value H(B) 323 into three to obtain hash values $H(B)_1$ 521, $H(B)_2$ 523, and $H(B)_3$ 525. The processor 130 may divide C hash value H(C) 325 into three to obtain hash values $H(C)_1$ 531, $H(C)_2$ 533, and $H(C)_3$ 535.

Returning back to FIG. 2, the processor 130, in operation 280, may generate a verification reference value (golden measurement) for verifying the target device 220 based on the plurality of hash values. A specific method of generating the verification reference value is described using

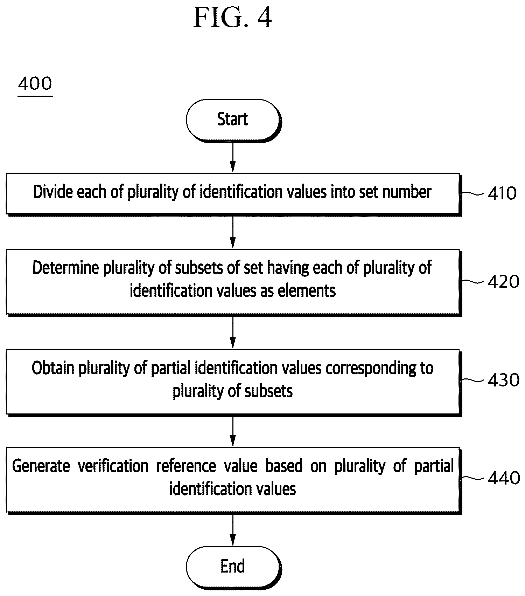

FIG. 4. A description overlapping with the description of FIG. 2 will be omitted.

Referring to flowchart 400 in FIG. 4, the processor 130, in operation 410, may divide each of a plurality of identification values (a plurality of hash values) into a set number.

The processor 130, in operation 420, may determine a plurality of subsets of a set having each of the plurality of identification values (the plurality of hash values) as elements. The processor 130 may determine subsets, excluding a universal set and an empty set, among all subsets of the set having each of the plurality of hash values as elements. For example, it is assumed and described that the plurality of hash values ((H(A) 321, H(B) 323, and H(C) 325) are three as in FIG. 6. The processor 130 may determine a plurality of subsets, excluding a universal set and an empty set, of a set {H(A), H(B), H(C)} having the plurality of hash values as elements. In the above case, the plurality of subsets may be six subsets, which are {H(A)}, {H(B)}, {H(C)}, {H(A), H(B)}, {H(A), H(C)}, and {H(B), H(C)}. In other words, the number of the plurality of subsets, excluding the universal set and the empty set, among all subsets of the set having each of the plurality of hash values as elements may be determined by equation 2.

[Equation 2]

$$p = 2^n - 2$$

In equation 2, p may indicate the number of a plurality of subsets, excluding a universal set and an empty set, among all subsets of a set having each of a plurality of hash values as elements, and n may indicate the number of the plurality of hash values. For example, as in FIG. 6, if the number (n) of the plurality of hash values is 3, the number (p) of the plurality of subsets described above may be 6 ($2^3$ - 2). In this case, the number of subsets having each element (in other words, each hash value) among the plurality of subsets, which are six, may be three, which is exactly half of the number of the plurality of subsets. For example, subsets including the hash value H(A) may be {H(A)}, {H(A), H(B)}, and {H(A), H(C)}, three in total.

Meanwhile, different hash values divided into a set number may be included in each of the plurality of subsets. For example, as in FIG. 6, the six subsets may be $\{H(A)_1\}$ 610, $\{H(B)_1\}$ 620, $\{H(C)_1\}$ 630, $\{H(A)_2, H(B)_2\}$ 640, $\{H(A)_3, H(C)_2\}$ 650, and $\{H(B)_3, H(C)_3\}$ 660. In other words, each hash value divided into three may be included in different subsets. Each subset may include either an individual sub-value (e.g., individual divided portion of a hash value), or a combination of sub-values (e.g., a combination of divided portions of different hash values). For example, hash values $H(A)_1$, $H(A)_2$, and $H(A)_3$, into which the hash value H(A) is divided, may be included in different subsets. In other words, the hash value $H(A)_1$ may be included in a subset $\{H(A)_1\}$, the hash

value $H(A)_2$ may be included in a subset $\{H(A)_2, H(B)_2\}$, and the hash value $H(A)_3$ may be included in a subset $\{H(A)_3, H(C)_2\}$. Therefore, the determined number (p) of subsets may be $2^n - 2$, and the set number (k), into which each hash value is divided, may be $2^{(n-1)} - 1$, half of p, and the number of subsets having each element (in other words, each hash value) among the plurality of subsets may also be $2^{(n-1)} - 1$, and thus, values obtained by dividing each hash value may be included in different subsets.

The processor 130, in operation 430, may obtain a plurality of partial identification values (a plurality of partial hash values) corresponding to the plurality of subsets. A partial hash value generated from combinations sub-values (e.g., from two or more divided portions of hash values) may be generated through an aggregation (e.g., an exclusive OR operation or an addition operation) of the sub-values. The plurality of partial hash values corresponding to the plurality of subsets may be a hash value generated through an addition operation or an exclusive OR (XOR) operation using the plurality of hash values divided into the set number. For example, a partial hash value corresponding to a subset $\{H(A),H(B)\}$ may be a value obtained by applying the addition operation (+) or the XOR operation ($\oplus$) to the hash value H(A) and the hash value H(B). The addition or XOR operation may be performed as a bitwise operation. Where the lengths of the hash values being combined differs, the smaller value(s) may be padded (e.g., with zeros) to be of equal length to the largest hash value. Since hash values may overlap through the above manners, the length of a verification reference value, which is a golden measurement, may decrease.

The length of the partial hash value corresponding to a combination of sub-values (e.g., divided portions of hash values) may be equal to the length of the longest sub-value in the subset being combined. For instance, the subset $\{H(A),H(B)\}$ may be identical to the longest of the length of the hash value H(A) and the length of the hash value H(B). Where H(A) and H(B) have equal lengths, then the subset $\{H(A),H(B)\}$ may be identical to the length of the hash value H(A) and the length of the hash value H(B). For example, if the length of the hash value H(A) is 85 bits and the length of the hash value H(B) is 85 bits, the length of the partial hash value corresponding to $\{H(A),H(B)\}$ may also be 85 bits. Through the above manners, the plurality of partial hash values corresponding to each of the plurality of subsets may be obtained.

The processor 130, in operation 440, may generate a verification reference value based on the plurality of partial identification values (the plurality of partial hash values). The processor 130 may generate the verification reference value by placing (or arranging) the plurality of partial hash values according to a predetermined placement rule. For example, the processor 130 may form one hash value by concatenating the plurality of partial hash values in an order according to the predefine placement rule. For example, the processor 130 may form one hash value by arranging the plurality of partial hash values in a row. The processor 130 may use the one hash value as the verification reference value. Based on the placement rule, as in FIG. 6, in order of $\{H(A)_1\}$ 610, $\{H(B)_1\}$ 620, $\{H(C)_1\}$ 630, $\{H(A)_2, H(B)_2\}$ 640, $\{H(A)_3, H(C)_2\}$ 650, and $\{H(B)_3, H(C)_3\}$ 660, corresponding partial hash values may be arranged. The length of the verification reference value may be twice the length of each of the plurality of identification values. For example, if the length of the hash value H(A) is 85 bits, the length of the verification reference value may be 170 bits.

The placement rule illustrated in FIG. 6 is an example, and various placement rules may be applied thereto. Information on the placement rule may not be provided to the verification device 210 and the target device 220 and may be used for debugging later. Through this, debugging may be easily performed while minimizing the exposure of device information.

The electronic device 100 may transmit the method of generating the verification measurement (for example, a verification reference value or a verification measurement value) described in FIGS. 3 to 6 to the target device 220. The electronic device 100 may not transmit a logic of generating the verification measurement to the target device 220 but may transmit software with the above method applied, which may output a corresponding verification measurement value if the target device 220 inputs a plurality of pieces of device information, to the target device 220. Through this, in a current operating state, the target device 220 may obtain a plurality of hash values based on the plurality of pieces of device information on the target device 220 and generate a verification measurement value for verifying the target device 220 based on the plurality of hash values. The target device 220 may transmit the verification measurement value to the verification device 210.

Returning back to FIG. 2, the processor 130, in operation 290, may transmit the verification reference value to the verification device 210. The verification device 210 may verify the target device 220 using the verification reference value. The verification device 210 may verify whether tampering occurs in the target device 220 by comparing the verification reference value received from the electronic device 100 and the verification measurement value received from the target device 220. If the verification reference value and the verification measurement value are different from each other, the verification device 210 may determine that tampering occurs in the target device 220 and transmit the verification measurement value to the electronic device 100.

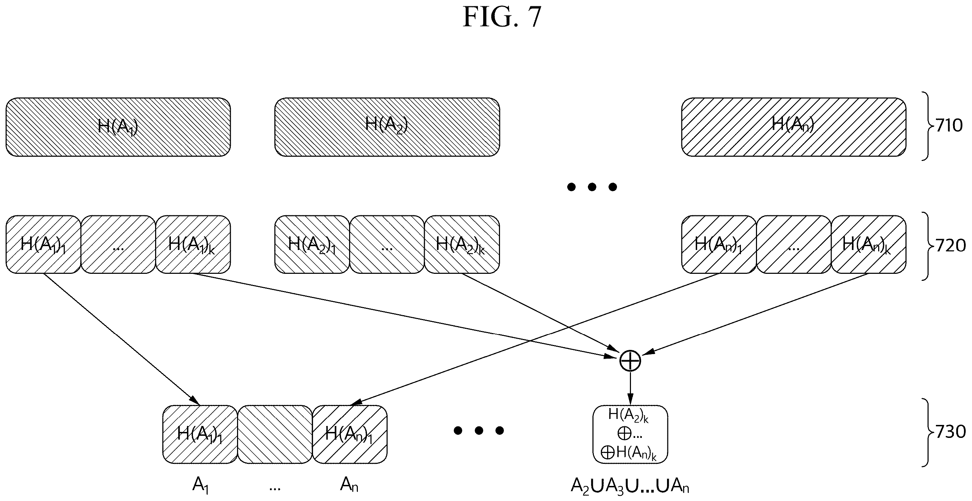

FIG. 7 is a diagram for illustrating an example of a process of generating a verification reference value by combining a plurality of hash values. FIGS. 5 and 6 are diagrams illustrating a method of generating a verification measurement based on three hash values, and FIG. 7 is a diagram illustrating a method of generating one verification measurement based on n hash values. The verification measurement may include a verification reference value.

Referring to FIG. 7, the processor 130 of the electronic device 100 may obtain n hash values 710 corresponding to n chunks. The processor 130 may obtain the n hash values 710 by performing hash processing for each of the n chunks.

The processor 130 may divide each of the n hash values 710 into a set number. The set number (k) may be determined by equation 1 described above. For example, a first hash value $H(A_1)$ may be divided into a plurality of hash values $H(A_1)_1$, $H(A_1)_2$, ... , $H(A_1)_K$ of the set number (k). A plurality of hash values 720 divided into the set number may be values having identical or similar lengths.

The processor 130 may determine a plurality of subsets of a set having each of the n hash values 710 as elements. The number of the plurality of subsets may include subsets, excluding a universal set and an empty set, among all subsets of the set having each of the n hash values 710 as elements. The number of the plurality of subsets may be determined by equation 2. The processor 130 may obtain, based on the plurality of hash values 720 divided into the set number, a plurality of partial hash values 730 corresponding to the plurality of subsets. The plurality of partial hash values 730 corresponding to the plurality of subsets may be generated through an addition operation or an XOR operation using the plurality of hash values 720 divided into the set number. The processor 130 may generate a verification reference value by placing the plurality of partial hash values 730 according to a predetermined placement rule.

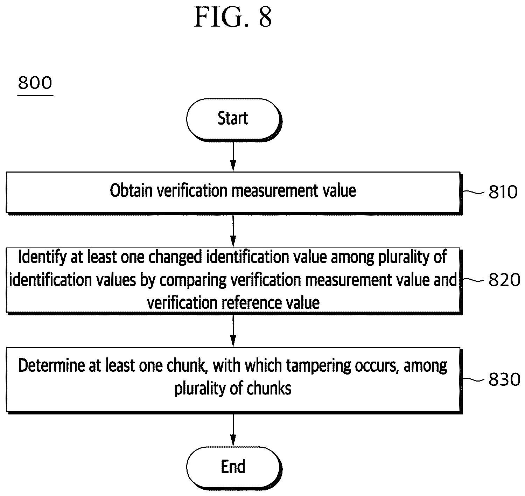

FIG. 8 is a flowchart of example operations of the electronic device 100. Specifically, FIG. 8 is a flowchart of a method of debugging a verification measurement value.

Referring to a flowchart 800, the processor 130 of the electronic device 100, in operation 810, may obtain a verification measurement value from the verification device 210. The verification device 210 may determine whether tampering occurs in the target device 220 by comparing a verification reference value received from the electronic device 100 and the verification measurement value received from the target device 220. The verification device 210 may, if the verification reference value and the verification measurement value are different from each other, determine that tampering occurs in the target device 220, and if the verification reference value and the verification measurement value are identical, determine that no tampering occurs in the target device 220. If it is determined that tampering occurs in the target device 220, the verification device 210 may transmit the verification measurement value of the target device 220 to the electronic device 100. In other words, if tampering occurs in the target device 220, the electronic device 100 may obtain the verification measurement value from the verification device 210 to perform debugging.

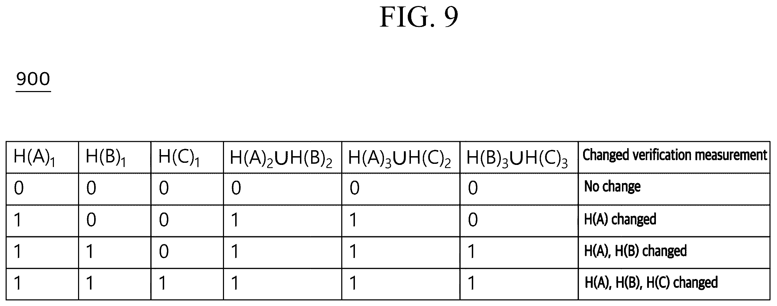

The processor 130, in operation 820, may identify at least one changed identification value among a plurality of identification values by comparing the verification measurement value and the verification reference value. The processor 130, by comparing the verification measurement value and the verification reference value, may identify at least one changed hash value among a plurality of hash values. FIG. 9 is a diagram for illustrating an example of a method of identifying a changed hash value in a verification measurement value. FIG. 9 assumes that a verification reference value is generated by three hash values H(A), H(B), and H(C). In addition, it is assumed that a plurality of partial hash values is placed in order of subsets indicated in the first row of FIG. 9 to form the verification reference value. A union symbol ($\cup$) indicates that an addition operation or an XOR operation is performed for elements within subsets.

If a hash value changed by tampering is not present among three hash values (see the second row of a table 900 of FIG. 9), six partial hash values corresponding to six subsets within a verification measurement value may be all identical (indicated as 0 in FIG. 9) to six partial hash values corresponding to six subsets within a verification reference value.

If the hash value H(A) is changed by tampering among three hash values (see the third row of the table 900 of FIG. 9), only three partial hash values, $H(A)_1$, $H(A)_2 \cup H(B)_2$, and $H(A)_3 \cup H(C)_2$, among six partial hash values corresponding to six subsets within the verification measurement value may be different (indicated as 1 in FIG. 9) from the verification reference value.

If the hash value H(A) and the hash value H(B) are changed by tampering among three hash values (see the fourth row of the table 900 of FIG. 9), five partial hash values, $H(A)_1$, $H(B)_1$, $H(A)_2 \cup H(B)_2$, $H(A)_3 \cup H(C)_2$, and $H(B)_3 \cup H(C)_3$, among six partial hash values corresponding to six subsets within the verification measurement value may be different (indicated as 1 in FIG. 9) from the verification reference value.

If all three hash values are changed by tampering (see the fifth row of the table 900 of FIG. 9), all six partial hash values corresponding to six subsets within the verification measurement value may be different (indicated as 1 in FIG. 9) from the verification reference value.

Therefore, by comparing the verification reference value and the verification measurement value, the processor 130 may identify at least one changed hash value among the plurality of hash values.

The processor 130, in operation 830, may determine at least one chunk, with which tampering occurs, among a plurality of chunks. The processor 130 may determine at least one chunk, with which tampering occurs, among the plurality of chunks based on a predetermined placement rule and at least one identified hash value. Since the plurality of hash values correspond to the plurality of chunks, at least one chunk corresponding to at least one hash value changed by tampering may be determined.

Through this, by comparing one verification measurement value and a verification reference value, it may be easy to debug device information corresponding to a chunk with which tampering occurs among various pieces of device information. In addition, since a plurality of verifications are not performed using each of a plurality of hash values but a single verification is performed using a verification reference value and a verification measurement value generated using a plurality of hash values, a possibility of exposing information on a structure of the target device 220 may decrease and resources required for an attestation task may decrease.

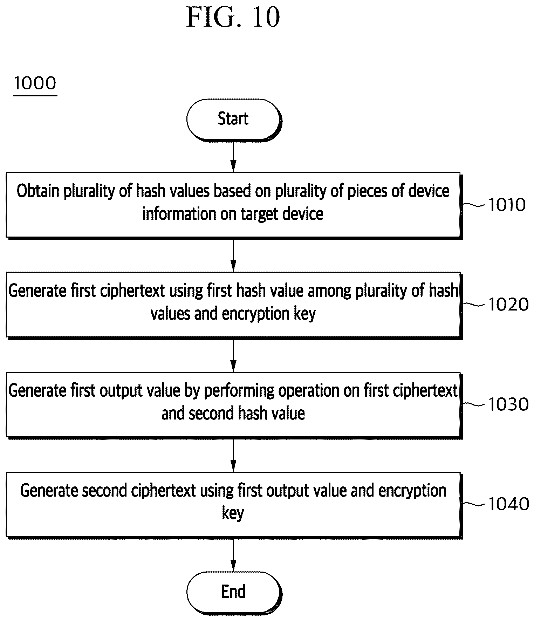

FIG. 10 is a flowchart of example operations of the electronic device 100. FIG. 10 is a diagram for illustrating a manner of encrypting device information using an encryption key.

Referring to a flowchart 1000, the processor 130 of the electronic device 100, in operation 1010, may obtain a plurality of hash values based on a plurality of pieces of device information on the target device 220. The processor 130 may divide the plurality of pieces of device information into a plurality of chunks and generate the plurality of hash values corresponding to the plurality of chunks based on the plurality of pieces of device information.

The processor 130, in operation 1020, may generate a first ciphertext using a first hash value among the plurality of hash values and an encryption key. For example, the encryption key may be an advanced encryption standard (AES) key used in an AES key encryption manner. The processor 130 may generate the first ciphertext by performing encryption on the first hash value using the encryption key.

The processor 130, in operation 1030, may generate a first output value by performing an operation on the first ciphertext and a second hash value. The processor 130 may generate the first output value by performing the operation with the second hash value on the first ciphertext corresponding to the first hash value. The processor 130 may generate the first output value by performing an addition operation or an XOR operation on the first ciphertext and the second hash value.

The processor 130, in operation 1040, may generate a second ciphertext using the first output value and an encryption key. The processor 130 may generate the second ciphertext by performing encryption using the encryption key (for example, an AES key) on the first output value. The second ciphertext may be a ciphertext corresponding to the first hash value and the second hash value.

In a similar manner, a final ciphertext may be generated by performing operations on a plurality of hash values sequentially. In other words, by performing an XOR operation on each of the plurality of hash values sequentially to be accumulated and encrypted using an encryption key, one final ciphertext may be generated.

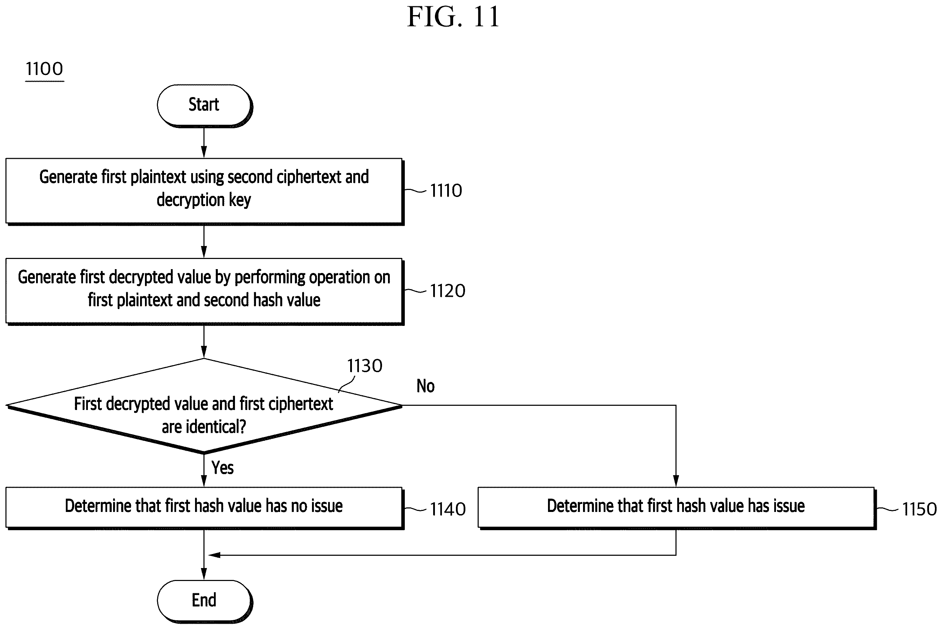

FIG. 11 is a flowchart of example operations of the electronic device 100. Specifically, FIG. 11 is a diagram for illustrating a manner of decrypting, using a decryption key, a ciphertext generated using an encryption key. While the manner starts from decrypting a second ciphertext corresponding to a first hash value and a second hash value for convenience of description, the same manner may also be applied to a manner of decrypting a final ciphertext corresponding to a plurality of hash values.

Referring to a flowchart 1100, the processor 130 of the electronic device 100, in operation 1110, may generate a first plaintext using the second ciphertext and a decryption key. The processor 130 may conduct decryption in reverse order of the encryption manner described in FIG. 10. In other words, by applying the decryption key to the second ciphertext to perform decryption, the processor 130 may generate the first plaintext.

The processor 130, in operation 1120, may generate a first decrypted value by performing an operation on the first plaintext and the second hash value. The processor 130 may generate the first decrypted value by performing a difference operation or an exclusive NOR (XNOR) operation on the first plaintext and the second hash value.

The processor 130, in operation 1130, may determine whether the first decrypted value and the first ciphertext are identical by comparing the first decrypted value and the first ciphertext.

If the first decrypted value and the first ciphertext are identical, proceeding (operation 1130 -> Yes) to operation 1140, the processor 130 may determine that the first hash value has no issue. In other words, if no issue such as tampering occurs in the first hash value, the first ciphertext into which the first hash value is encrypted and the first decrypted value obtained by decrypting the second ciphertext and removing the second hash value may be identical.

If the first decrypted value and the first ciphertext are not identical, proceeding (operation 1130 -> No) to operation 1150, the processor 130 may determine that the first hash value has an issue. In other words, if an issue such as tampering occurs in the first hash value, the first ciphertext into which the first hash value is encrypted and the first decrypted value obtained by decrypting the second ciphertext and removing the second hash value may be different.

In a similar manner, by decrypting a final ciphertext generated through sequential operations on a plurality of hash values in reverse order to sequentially generate decrypted values and compare the decrypted values to corresponding ciphertexts, a hash value with which tampering initially occurs may be identified. Through this, a chunk corresponding to the hash value with which tampering initially occurs may be identified. The above-described debugging manner may not expose device information on the target device 220 at all.

The electronic device according to the above-described example implementations may include a processor, a memory for storing and executing program data, a permanent storage such as a disk drive, a communication port that communicates with an external device, and a user interface device such as a touch panel, a key, and a button. Methods implemented as software modules or algorithms may be stored in a computer-readable recording medium as computer-readable codes or program instructions executable on the processor. Here, the computer-readable recording medium includes a magnetic storage medium (for example, read-only memory (ROM), random-access memory (RAM), floppy disks, and hard disks) and an optically readable medium (for example, CD-ROM and digital versatile discs (DVDs)). The computer-readable recording medium may be distributed among network-connected computer systems, so that the computer-readable codes may be stored and executed in a distributed manner. The medium may be readable by a computer, stored in a memory, and executed on a processor.

The example implementations may be represented by functional block elements and various processing steps. The functional blocks may be implemented in any number of hardware and/or software configurations that perform specific functions. For example, an example implementation may adopt integrated circuit configurations, such as memory, processing, logic, and/or look-up table, which may execute various functions by the control of one or more microprocessors or other control devices. Similar to that elements may be implemented as software programming or software elements, the example implementations may be implemented in a programming or scripting language such as C, C++, Java, assembler, etc., including various algorithms implemented as a combination of data structures, processes, routines, or other programming constructs. Functional aspects may be implemented in an algorithm running on one or more processors. Further, the example implementations may adopt the existing art for electronic environment setting, signal processing, and/or data processing. Terms such as "mechanism," "element," "means," and "configuration" may be used broadly and are not limited to mechanical and physical configurations. The terms may include the meaning of a series of routines of software in association with a processor or the like.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a combination can in some cases be excised from the combination, and the combination may be directed to a subcombination or variation of a subcombination.

The above-described example implementations are merely examples, and other example implementations may be implemented within the scope of the claims to be described later.

## Claims

1. An electronic device comprising:

   a communication interface (110);
   one or more processors (130); and
   one or more memories (120) configured to store one or more instructions,
   wherein the one or more processors (130) are configured to execute the one or more instructions to:

   divide a plurality of pieces of device information on a target device (220) into a plurality of chunks;
   obtain, based on the plurality of pieces of device information, a plurality of identification values corresponding to the plurality of chunks, respectively;
   divide each identification value of the plurality of identification values into a number of identification values to produce a plurality of groups of identification values;
   generate a verification reference value based on the plurality of groups of identification values; and
   transmit the verification reference value to a verification device (210) that is configured to verify the target device (220).

2. The electronic device of claim 1, wherein a length of the verification reference value is twice a length of each identification value of the plurality of groups of identification values.

3. The electronic device of claim 1 or claim 2, wherein the one or more processors (130) are configured to execute the one or more instructions to transmit information relating to generating the verification reference value to the target device (220).

4. The electronic device of any preceding claim, wherein the one or more processors (130) are configured to execute the one or more instructions to:

   determine a plurality of subsets of a set, wherein the plurality of identification values are elements of the set;
   obtain a plurality of partial identification values corresponding to the plurality of subsets; and generate the verification reference value based on the plurality of partial identification values.

5. The electronic device of claim 4, wherein the plurality of subsets include all subsets, excluding a universal set and an empty set, of the set.

6. The electronic device of claim 4 or claim 5, wherein the one or more processors (130) are configured to execute the one or more instructions to generate the plurality of partial identification values corresponding to the plurality of subsets through an addition operation or an exclusive OR operation based on the plurality of groups of identification values.

7. The electronic device of any of claims 4-6, wherein the one or more processors (130) are configured to execute the one or more instructions to arrange the plurality of partial identification values based on a predetermined placement rule to generate the verification reference value.

8. The electronic device of any preceding claim, wherein the one or more processors (130) are configured to execute the one or more instructions to determine the number of identification values based on a second number of subsets of a set, wherein the plurality of identification values are elements of the set.

9. The electronic device of claim 8, wherein the number of identification values is half of the second number of the subsets.

10. The electronic device of any preceding claim, wherein the one or more processors (130) are configured to execute the one or more instructions to obtain the plurality of identification values based on performing hash processing for the plurality of pieces of device information obtained in a normal operating state of the target device (220).

11. A method, performed by an electronic device (100), of generating a verification reference value for verifying a target device (220), the method comprising:

   dividing a plurality of pieces of device information on the target device (220) into a plurality of chunks;
   obtaining, based on the plurality of pieces of device information, a plurality of identification values corresponding to the plurality of chunks, respectively;
   dividing each identification value of the plurality of identification values into a number of identification values to produce a plurality of groups of identification values;
   generating a verification reference value for verifying the target device (220) based on the plurality of groups of identification values; and transmitting the verification reference value to a verification device (210).

12. A verification system comprising:

   an electronic device (100) according to any of claims 1-10;
   a target device (220); and
   a verification device (210),
   wherein the target device (220) is configured to:

      obtain a second plurality of identification values based on the plurality of pieces of device information on the target device (220);
      based on the second plurality of identification values, generate a verification measurement value configured to verify the target device (220); and
      transmit the verification measurement value to the verification device (210), and

   wherein the verification device (210) is configured to verify, based on the verification reference value and the verification measurement value, the target device (220).

# FIG. 1

# FIG. 2

200

```
        ( Start )
            │
            ▼
┌─────────────────────────────────────────┐
│  Divide plurality of pieces of device    │
│  information on target device            │─── 250
│  into plurality of chunks                │
└─────────────────────────────────────────┘
            │
            ▼
┌─────────────────────────────────────────┐
│  Obtain plurality of identification      │
│  values corresponding to plurality       │─── 260
│  of chunks based on plurality of pieces  │
│  of device information                   │
└─────────────────────────────────────────┘
            │
            ▼
┌─────────────────────────────────────────┐
│  Divide each of plurality of             │─── 270
│  identification values into set number   │
└─────────────────────────────────────────┘
            │
            ▼
┌─────────────────────────────────────────┐
│  Generate verification reference value   │
│  for verifying target device by          │─── 280
│  combining plurality of identification   │
│  values divided into set number          │
└─────────────────────────────────────────┘
            │
            ▼
┌─────────────────────────────────────────┐
│  Transmit verification reference value   │─── 290
│  to verification device                  │
└─────────────────────────────────────────┘
            │
            ▼
        ( End )
```

# FIG. 3

# FIG. 4

<u>400</u>

```
        ┌─────────┐
        │  Start  │
        └─────────┘
             │
             ▼
```

Divide each of plurality of identification values into set number ~ 410

Determine plurality of subsets of set having each of plurality of identification values as elements ~ 420

Obtain plurality of partial identification values corresponding to plurality of subsets ~ 430

Generate verification reference value based on plurality of partial identification values ~ 440

```
        ┌─────────┐
        │   End   │
        └─────────┘
```

FIG. 5

321

H(A)

323

H(B)

325

H(C)

$H(A)_1$ $H(A)_2$ $H(A)_3$

$H(B)_1$ $H(B)_2$ $H(B)_3$

$H(C)_1$ $H(C)_2$ $H(C)_3$

511 513 515

521 523 525

531 533 535

# FIG. 6

## FIG. 7

# FIG. 8

<u>800</u>

Start

Obtain verification measurement value — 810

Identify at least one changed identification value among plurality of identification values by comparing verification measurement value and verification reference value — 820

Determine at least one chunk, with which tampering occurs, among plurality of chunks — 830

End

# FIG. 9

900

| H(A)$_1$ | H(B)$_1$ | H(C)$_1$ | H(A)$_2$∪H(B)$_2$ | H(A)$_3$∪H(C)$_2$ | H(B)$_3$∪H(C)$_3$ | Changed verification measurement |
|---|---|---|---|---|---|---|
| 0 | 0 | 0 | 0 | 0 | 0 | No change |
| 1 | 0 | 0 | 1 | 1 | 0 | H(A) changed |
| 1 | 1 | 0 | 1 | 1 | 1 | H(A), H(B) changed |
| 1 | 1 | 1 | 1 | 1 | 1 | H(A), H(B), H(C) changed |

EP 4 764 923 A1

# FIG. 10

1000

```
          ( Start )
             │
             ▼
┌─────────────────────────────────────────────────────────┐
│ Obtain plurality of hash values based on plurality of     │
│ pieces of device information on target device             │──1010
└─────────────────────────────────────────────────────────┘
             │
             ▼
┌─────────────────────────────────────────────────────────┐
│ Generate first ciphertext using first hash value among    │
│ plurality of hash values and encryption key               │──1020
└─────────────────────────────────────────────────────────┘
             │
             ▼
┌─────────────────────────────────────────────────────────┐
│ Generate first output value by performing operation on    │
│ first ciphertext and second hash value                    │──1030
└─────────────────────────────────────────────────────────┘
             │
             ▼
┌─────────────────────────────────────────────────────────┐
│ Generate second ciphertext using first output value and   │
│ encryption key                                            │──1040
└─────────────────────────────────────────────────────────┘
             │
             ▼
          ( End )
```

# FIG. 11

1100

```
                    ┌─────────┐
                    │  Start  │
                    └────┬────┘
                         ▼
┌──────────────────────────────────────────┐
│ Generate first plaintext using second     │
│ ciphertext and decryption key             │──1110
└──────────────────┬───────────────────────┘
                   ▼
┌──────────────────────────────────────────┐
│ Generate first decrypted value by         │
│ performing operation on first plaintext   │──1120
│ and second hash value                     │
└──────────────────┬───────────────────────┘
                   ▼
```

1130

First decrypted value and first ciphertext are identical?

Yes       No

Determine that first hash value has no issue  —1140

Determine that first hash value has issue  —1150

End

EP 4 764 923 A1

Europäisches
Patentamt

European
Patent Office

Office européen
des brevets

# EUROPEAN SEARCH REPORT

**Application Number**

EP 25 22 2868

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LU ET AL: "M-TREE: A high efficiency security architecture for protecting integrity and privacy of software", JOURNAL OF PARALLEL AND DISTRIBUTED COMPUTING. ELSEVIER, AMSTERDAM., NL, vol. 66, no. 9, 1 September 2006 (2006-09-01), pages 1116-1128, XP005597362, ISSN: 0743-7315, DOI: 10.1016/J.JPDC.2006.04.011 * page 3 - page 8 * ----- | 1-12 | INV. G06F21/57 G06F21/64 H04L9/32 H04L9/00 |
| A | G. EDWARD SUH ET AL: "AEGIS", 2003 INTERNATIONAL CONFERENCE ON SUPERCOMPUTING. (ICS). SAN FRANCISCO, CA, JUNE 23 - 26, 2003.; [ACM INTERNATIONAL CONFERENCE ON SUPERCOMPUTING. ] NEW YORK, NY : ACM., US, 23 June 2003 (2003-06-23), pages 160-171, XP058154989, DOI: 10.1145/782814.782838 ISBN: 9781581137330 * pages 1,6 - page 7 * ----- | 1-12 | |
| A | US 2005/149737 A1 (DRISCOLL KEVIN R [US]) 7 July 2005 (2005-07-07) * paragraph [0017] * * paragraph [0020] * * paragraph [0050] * ----- | 1-12 | **TECHNICAL FIELDS SEARCHED (IPC)** G06F H04L |

-/--

The present search report has been drawn up for all claims

| Place of search | Date of completion of the search | Examiner |
|---|---|---|
| Munich | 9 April 2026 | Barla Harter, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

EPO FORM 1503 03.82 (P04C01)

page 1 of 2

**EP 4 764 923 A1**

| | Europäisches Patentamt European Patent Office Office européen des brevets | **EUROPEAN SEARCH REPORT** | **Application Number** EP 25 22 2868 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JEFF WARREN ET AL: "Metadata Independent Hashing for Media Identification & P2P Transfer Optimisation", CYBER-ENABLED DISTRIBUTED COMPUTING AND KNOWLEDGE DISCOVERY (CYBERC), 2012 INTERNATIONAL CONFERENCE ON IEEE, 10 October 2012 (2012-10-10), pages 58-65, XP032283311, DOI: 10.1109/CYBERC.2012.19 ISBN: 9781467326247 * page 3 - page 5 * ----- | 1-12 | |
| | | | TECHNICAL FIELDS SEARCHED (IPC) |

The present search report has been drawn up for all claims

| Place of search | Date of completion of the search | Examiner |
|---|---|---|
| Munich | 9 April 2026 | Barla Harter, I |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................................

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 25 22 2868

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2026

| Patent document cited in search report | Publication date | Patent family member(s) | | Publication date |
|---|---|---|---|---|
| US 2005149737 A1 | 07-07-2005 | EP | 1700185 A1 | 13-09-2006 |
| | | US | 2005149737 A1 | 07-07-2005 |
| | | WO | 2005066736 A1 | 21-07-2005 |

EPO FORM P0459

For more details about this annex : see Official Journal of the European Patent Office, No. 12/82